# EUROPEAN PATENT APPLICATION

(11) **EP 1 640 672 A2**
(43) Date of publication of application: **29.03.2006**
(21) Application number: 05251243.1
(22) Date of filing: 02.03.2005
(51) Int. Cl.: F24F 3/16

(54) **Air purifying robot and operation method thereof**

(30) Priority: 22.09.2004 KR 2004076066
(71) Applicant: LG ELECTRONICS INC., Seoul (KR)
(72) Inventor: Lee, Seong-Bin, Siheung, Gyeonggi-Do (KR); Rew, Ho-Seon, Seoul (KR)
(74) Representative: Shackleton, Nicola

(57) **Abstract**

An air purifying robot and its operation method capable of purifying air using a mobile robot are disclosed. To this end, an air purifying robot comprises: a main body casing having a certain space therein, and provided with a suction hole for sucking ambient air and a discharge hole for discharging the purified air; a fan motor installed in the main body casing, and rotating so as to suck the ambient air of the main body casing through the suction hole; a dust collecting filter for filtering pollutants contained in the ambient air having been sucked through the suction hole; main wheels installed at a lower surface of the main body casing at a certain interval therebetween, and driven by the motor; an auxiliary wheel installed so as to maintain a horizontal state of the main casing, and moving the air purifying robot together with the main wheels; and a control unit for controlling the fan motor, the dust collecting filter and the main wheels.

## Description

### BACKGROUND OF THE INVENTION

### 1. Field of the Invention

The present invention relates to an air purifier, and particularly, to an air purifying robot and its operation method for purifying the air using a mobile robot.

### 2. Description of the Background Art

In general, an air purifier in accordance with the conventional art includes: an air purifier casing provided with a suction hole for sucking indoor air and a discharge hole for discharging purified air; a fan motor installed in the air purifier casing, rotating so as to suck the indoor air into the air purifier casing; and a dust collecting filter for filtering the air which has been sucked into the air purifier casing.

The air purifier in accordance with the conventional art having such a structure is installed at a specific place in a room. Accordingly, in the air purifier in accordance with the conventional art, the fan motor is operated as a user presses an operation button, and the polluted indoor air is sucked into the air purifier casing by the operation of the fan motor. Thereafter, the sucked polluted indoor air is purified into fresh air by the filtering of the dust collecting filter, and the purified fresh air is discharged to the outside of the air purifier casing through the discharge hole.

However, since the air purifier in accordance with the conventional art is placed at the specific place in the room, purifying the polluted air is intensively performed at the specific place where the air purifier in accordance with the conventional art is installed, while the polluted air is not speedily performed at the other area, undesirably.

Accordingly, in order to solve such problems, a method of increasing a capacity of the fan motor to thereby increase flow of suction air of the air purifier may be used. However, such a method may cause several problems such as increases in a manufacturing cost, power consumption and the size, and the like.

### SUMMARY OF THE INVENTION

Therefore, an object of the present invention is to provide an air purifying robot and its operation method capable of speedily purifying polluted air of an entire polluted zone by moving within the zone.

Another object of the present invention is to provide an air purifying robot and its operation method capable of reducing a cost, power consumption and noises generated due to a large-capacity fan motor, by purifying polluted air of a polluted zone while moving in the zone.

To achieve these and other advantages and in accordance with the purpose of the present invention, as embodied and broadly described herein, there is provided an air purifying robot comprising: a main body casing having a certain space therein, and provided with a suction hole for sucking ambient air and a discharge hole for discharging the purified air; a fan motor installed in the main body casing, and rotating so as to suck the ambient air of the main body casing through the suction hole; a dust collecting filter for filtering pollutants contained in the ambient air having been sucked through the suction hole; main wheels installed at a lower surface of the main body casing at a certain interval therebetween, and driven by the motor; an auxiliary wheel installed so as to maintain a horizontal state of the main casing, and moving the air purifying robot together with the main wheels; and a control unit for controlling the fan motor, the dust collecting filter and the main wheels.

To achieve these and other advantages and in accordance with the purpose of the present invention, as embodied and broadly described herein, there is provided an operation method of an air purifying robot comprising: detecting a level of air pollution of a preset area in which the air purifying robot is moving; comparing the detected level of air pollution with a preset reference value; and stopping the air purifying robot when the detected level of air pollution is greater than the preset reference value, and purifying the ambient air of a spot where the robot stops.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
Figure 1 is a perspective view of an air purifying robot in accordance with the present invention;
Figure 2 is a bottom view of the air purifying robot in accordance with the present invention;
Figure 3 is a longitudinal sectional view of the air purifying robot in accordance with the present invention; and
Figure 4 is a flow chart showing an operation method of the air purifying robot in accordance with the present invention.

### DETAILED DESCRIPTION OF THE PREFERRED EMBODIMENTS

Reference will now be made in detail to the preferred embodiments of the present invention, examples of which are illustrated in the accompanying drawings.

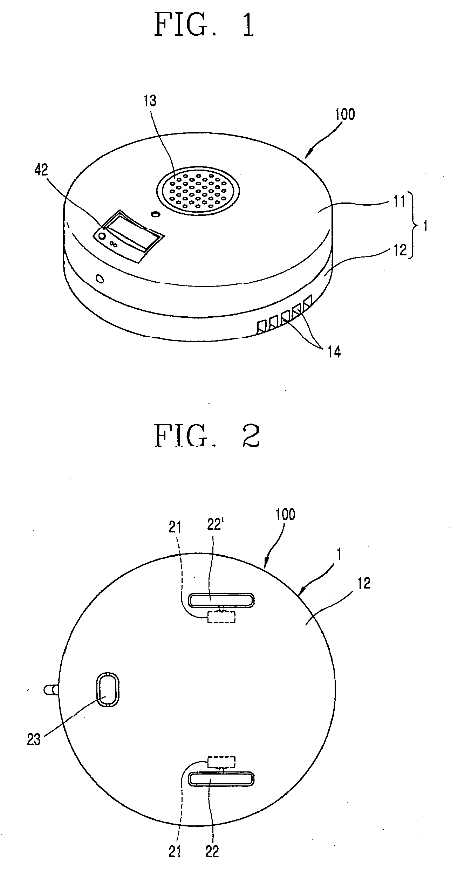

Hereinafter, preferred embodiments of an air purifying robot and its operation method capable of speedily purifying polluted air in an entire polluted zone and of reducing a cost, power consumption and noises generated due to a use of a large-capacity fan motor, by purifying the polluted air of the polluted zone while moving in the polluted zone, will now be described in detail with reference to Figures 1 to 4.

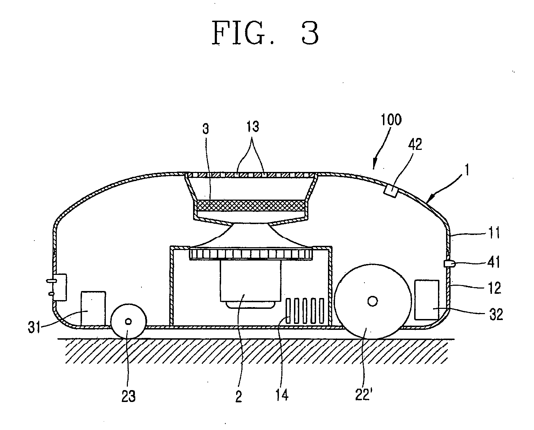

Figure 1 is a perspective view of an air purifying robot in accordance with the present invention, Figure 2 is a bottom view of an air purifying robot in accordance with the present invention, and Figure 3 is a longitudinal sectional view of an air purifying robot in accordance with the present invention.

As shown in Figures 1 to 3, the air purifying robot in accordance with the present invention includes: a main body casing 1 having a certain space therein, and provided with a suction hole for sucking ambient air and a discharge hole for discharging purified air; a fan motor 2 installed in the main body casing 1, and rotating so as to suck the ambient air into the main body casing 1 through the suction hole; a dust collecting filter 3 for filtering pollutants contained in the ambient air having been sucked through the suction hole; main wheels 22 and 22' installed at the bottom of the main body casing at a certain interval therebetween and driven by the motor; an auxiliary wheel 23 installed so as to maintain a horizontal state of the main body casing 1, and moving the air purifying robot together with the main wheels; and a control unit 32 for controlling the fan motor, the dust collecting filter and the main wheels.

The main body casing 1 has a certain space therein and is provided with a suction hole for sucking ambient polluted air and a discharge hole for discharging the purified air.

The fan motor 2 is installed in the main body casing 1 and generates a suction force for sucking ambient air.

The dust collecting filter 3 is installed at an upper side of the fan motor 2 and filters pollutants (e.g., dust) contained in the sucked ambient air.

The main body casing 1 comprises an upper cover 11 and a lower cover 12. A suction hole 13 is formed at a central portion of the upper cover 11, and a plurality of discharge holes 14 are formed at a side surface of the lower cover 12 at regular intervals. The ambient air is sucked through the suction hole 13 of the upper side by a suction force generated by the operation of the fan motor 2, and the sucked ambient air passes through the dust collecting filter 3 and the fan motor 2 and then is discharged to the outside through the discharge hole 14.

And, a pair of main wheels 22 and 22' that are rotated forward or backward by the motor 21 is installed at a lower side of the main body casing 1. An auxiliary wheel 23 is installed at the rear of the main wheels 22 and 22' and supports the air purifying robot 1 so as to allow the robot to move, maintaining a horizontal state of its main body casing 1 while the main wheels 22 and 22' are moving.

Also, a battery 31 that is charged or discharged is installed at one side of the casing 1, and a control unit 32 such as a micro computer for controlling the fan motor, the dust collecting filter, the main wheels and the like is installed at the other side of the casing 1.

In order to detect an obstacle when the air purifying robot 1 moves, a detecting sensor 41 is installed at a front surface of the main body casing 1, and an air pollution detecting sensor 42 is installed at one side of an upper surface of the main body casing 1 in order to detect an air pollution state of a place where the air purifying robot 1 is placed.

As for the air purifying robot in accordance with the present invention having such a structure, if a polluted zone is found while the robot purifying robot 100 is moving in a cleaning zone, the fan motor 2 is operated, and the ambient air of the main body casing 1 is sucked into the main body casing 1 through the suction hole 13 formed at an upper side of the main body casing 1 by a suction force generated by the operation of the fan motor 2.

And, the ambient air having been sucked into the main body casing 1 passes through the dust collecting filter 3 and the fan motor 2, and is discharged to the outside of the main body casing 1 through the discharge hole 14 formed at a side surface of the lower end portion of the main body casing 1. At this time, when the ambient air passes through the dust collecting filter 3, pollutants contained in the ambient air are filtered by the dust collecting filter 3. Thus, the ambient air is purified into the fresh air, and the purified fresh air is discharged to the outside of the main body casing 1 through the discharge hole 14.

Also, since the main wheels 22 and 22' are rotated forward and backward by forward rotation or backward rotation of the motor 21, the air purifying robot 100 moves forward and backward or rotates. And, if the power of the battery 31 is consumed up, the battery 31 is recharged so as to operate the air purifying robot again.

And, if the obstacle detecting sensor 41 detects an obstacle while the air purifying robot 100 is moving for the air purifying, the air purifying robot 100 avoids the obstacle and keep moving. Also, if a level of air pollution which is detected by the air pollution detecting sensor 42 is greater than a reference value while the robot 100 is moving, the robot purifying robot 100 stays for a certain time in the area where more than a certain level of air pollution is detected and performs intensive purifying operation. The movement and the purifying operation of the air purifying robot 100 in accordance with the present invention are controlled by a control signal of the control unit 32.

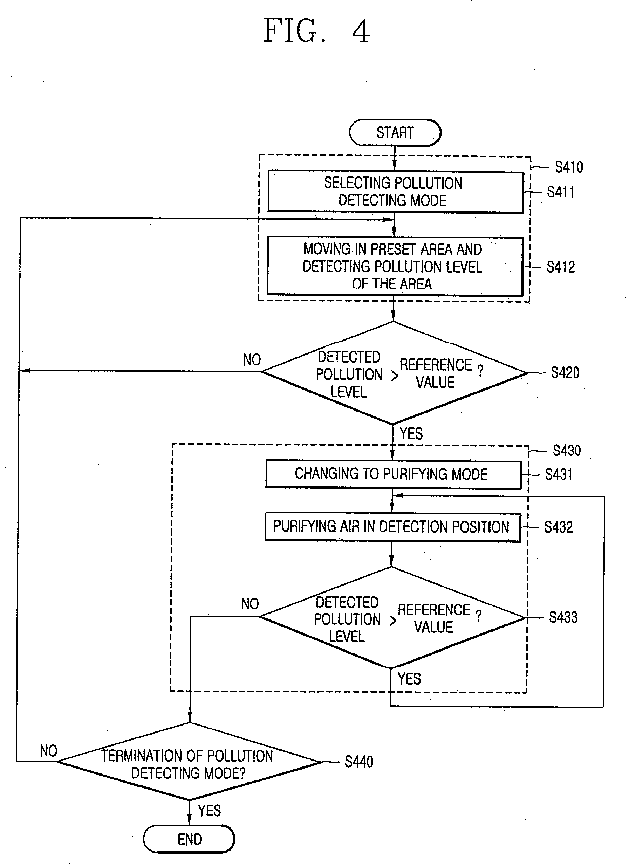

The operation of the air purifying robot in accordance with the present invention will now be described with reference to Figure 4.

As shown in Figure 4, the operation method of the air purifying robot in accordance with the present invention comprises the steps of: detecting a level of air pollution of a preset area where the air purifying robot is moving (S410); comparing the detected level of air pollution with a preset reference value (S420); stopping the air purifying robot when the detected level of air pollution is greater than the preset reference value, and purifying the ambient air at the spot where the robot stops (S430); and returning to the detecting step when the detected level of air pollution is smaller than the preset reference value (S440).

The operation method of the air purifying robot in accordance with the present invention will now be described in detail.

When a user turns on the air purifying robot 100 in accordance with the present invention and selects a pollution detecting mode (S411), a pollution detection area is selected from map information which has been pre-stored in a memory of the air purifying robot 100. And, the air purifying robot 100 moves along a path of the pollution detection area, detecting a level of air pollution of the area (where the robot 100 is moving) using the air pollution detecting sensor 42 (S412).

The air purifying robot compares the level of air pollution which is detected by the air pollution detecting sensor 42 with a preset reference value (S420).

When the detected level of the air pollution is smaller than the reference value, the air purifying robot 100 keeps moving along a path of the pollution detection area, detecting a level of air pollution. When the detected level of the air pollution is greater than the reference value, a mode of the air purifying robot 100 is changed to a purifying mode (S431).

When the mode of the air purifying robot 100 is changed to the purifying mode, the robot purifying robot 100 stops at a spot where the level of air pollution is detected and performs air purifying operation for a preset certain time (S432).

After the air purifying robot 100 performs the air purifying operation for the preset certain time, the air purifying robot 100 detects a level of air pollution again by using the air pollution detecting sensor 42, and compares the detected level of air pollution with a reference value (S433).

When the detected level of air pollution is greater than the reference value, the air purifying robot 100 keeps performing air purifying operation at the spot where it stops. And, when the detected level of air pollution is smaller than the reference value, the air purifying robot 100 moves along a path of the preset pollution detection area, detecting a level of the air pollution.

If the pollution detecting mode is canceled or terminated by a user in the middle of moving to purify the air, the air purifying robot 100 returns to an original position where it starts, and stops (S440). In contrast, if the pollution detecting mode is not canceled or terminated, the air purifying robot 100 keeps moving, performing purifying operation.

As so far described in detail, the air purifying robot and its operation method in accordance with the present invention can speedily purify polluted air in an entire area of a polluted zone by moving within the zone.

In addition, the air purifying robot and its operation method can reduce a cost, power consumption and noises generated due to a use of a large-capacity fan motor by purifying polluted air of the polluted zone while moving in the zone.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. An air purifying robot comprising:
a main body casing having a certain space therein, and provided with a suction hole for sucking ambient air and a discharge hole for discharging the purified air;
a fan motor installed in the main body casing, and rotating so as to suck the ambient air of the main body casing through the suction hole;
a dust collecting filter for filtering pollutants contained in the ambient air having been sucked through the suction hole;
main wheels installed at a lower surface of the main body casing at a certain interval therebetween, and driven by the motor;
an auxiliary wheel installed so as to maintain a horizontal state of the main casing, and moving the air purifying robot together with the main wheels; and
a control unit for controlling the fan motor, the dust collecting filter and the main wheels.

2. The air purifying robot of claim 1, wherein the main body casing further comprises:
an obstacle detecting sensor for detecting an obstacle while the air purifying robot is moving.

3. The air purifying robot of claim 1, wherein the main body casing further comprises:
an air pollution detecting sensor for detecting an air pollution state.

4. The air purifying robot of claim 1, wherein the suction hole is provided at an upper surface of the main body casing, and the dust collecting filter and the fan motor are sequentially installed under the suction hole.

5. The air purifying robot of claim 1, wherein the main body casing further comprises:
a rechargeable battery for supplying power to the air purifying robot.

6. An air purifying robot comprising:
a moving unit for moving the air purifying robot along a preset moving path;
an air purifying unit for purifying the ambient air of the preset moving path; and
a control unit for controlling the moving unit and the air purifying unit.

7. The air purifying robot of claim 6, wherein the moving unit comprises:
two main wheels driven by a motor; and
an auxiliary wheel installed on the same plane as the main wheels, for maintaining a horizontal state of the air purifying robot.

8. The air purifying robot of claim 6, wherein the air purifying unit comprises:
an air pollution detecting sensor for detecting an air pollution state;
a fan motor rotating so as to suck polluted air by a signal which is generated from the control unit according to a pollution state; and
a dust collecting filter for filtering pollutants contained in the sucked polluted air.

9. The air purifying robot of claim 6, further comprising:
a power supply unit for supplying power to the moving unit, the air purifying unit and the control unit.

10. The air purifying robot of claim 9, wherein the power supply unit is a rechargeable battery.

11. An operation method of an air purifying robot comprising:
detecting a level of air pollution of a preset area in which the air purifying robot is moving;
comparing the detected level of air pollution with a preset reference value; and
stopping the air purifying robot when the detected level of air pollution is greater than the preset reference value, and purifying the ambient air of a spot where the robot stops.

12. The method of claim 11, wherein the detecting step further comprises:
selecting a pollution detection area from map information pre-stored in a memory.

13. The method of claim 12, wherein the step of selecting the pollution detection area further comprises:
selecting a moving path of the air purifying robot in the pollution detection area.

14. The method of claim 11, further comprising:
returning to the detecting step when the detected level of air pollution is smaller than the preset reference value.
